Europäisches Patentamt

European Patent Office

Office européen des brevets

(11) Publication number: **0 150 537**
**B1**

(12) **EUROPEAN PATENT SPECIFICATION**

(45) Date of publication of patent specification: **27.04.88**

(21) Application number: **84201916.8**

(22) Date of filing: **19.12.84**

(51) Int. Cl.⁴: **B 29 D 11/00**, G 02 B 3/04

(54) **Method of manufacturing an optical element.**

(30) Priority: **18.01.84 NL 8400152**

(43) Date of publication of application:
**07.08.85 Bulletin 85/32**

(45) Publication of the grant of the patent:
**27.04.88 Bulletin 88/17**

(84) Designated Contracting States:
**BE DE FR GB NL SE**

(56) References cited:
**DE-A-2 133 983**
**FR-A-1 024 794**
**FR-A-2 177 600**
**GB-A- 550 645**
**NL-A- 277 195**
**US-A-2 544 413**
**US-A-2 789 318**
**US-A-3 917 766**

(73) Proprietor: **N.V. Philips' Gloeilampenfabrieken**
**Groenewoudseweg 1**
**NL-5621 BA Eindhoven (NL)**

(72) Inventor: **Verhoeven, Johannes Maria Gerardus**
**c/o INT. OCTROOIBUREAU B.V. Prof. Holstlaan 6**
**NL-5656 AA Eindhoven (NL)**
Inventor: **Smid, Albert**
**c/o INT. OCTROOIBUREAU B.V. Prof. Holstlaan 6**
**NL-5656 AA Eindhoven (NL)**
Inventor: **Amendt, Herman Maria Antonius**
**c/o INT. OCTROOIBUREAU B.V. Prof. Holstlaan 6**
**NL-5656 AA Eindhoven (NL)**

(74) Representative: **Auwerda, Cornelis Petrus et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a method of manufacturing an optical element comprising a substrate having an approximately spherical surface and a correction layer of a synthetic resin provided on said surface, the free surface of which is convex aspherical and shows a collection of inflection points situated approximately on a circle, according to which method the substrate is placed opposite to and placed from a rotationally symmetrical matrix which has a concave aspherical surface having a collection of inflection points situated approximately on a circle, a curable liquid synthetic resin composition being provided between the matrix and the substrate, the distance between the matrix and the substrate being reduced to a desired final position, the synthetic resin composition being cured, and the substrate together with the correction layer of cured synthetic resin connected thereto, the free surface of which is a negative copy of the surface of the matrix, being removed from the matrix.

The method may be used, for example, for manufacturing mono-aspherical lenses.

British Patent Specification No. 1,301,551 discloses a method of manufacturing an optical element as described hereinbefore, starting with a flat or spherical substrate on which a thermosetting layer of synthetic resin is provided, for example for correction of aberration. The variation in thickness of the layer of synthetic resin must be in agreement with the desired correction. A positive curvature may be necessary in the centre of the optical element and a negative curvature may be necessary at the edge. In between, a collection of inflection points exists in the surface of the correction layer.

Too large a thickness of the layer of synthetic resin gives rise to inaccuracies due to shrinkage during curing of the synthetic resin. A small thickness of the correction layer is possible by providing the substrate with a surface which approaches the desired variation of the correction layer, but a substrate having an approximately spherical surface can be manufactured more simply and more accurately than a substrate having a surface having a prescribed aspherical character.

When a spherical substrate is used it is necessary for the matrix which is to form a reproduction of the correction layer and the substrate to be centred accurately with respect to each other prior to curing the synthetic resin. For that purpose may be used, for example, a guiding mechanism which keeps the matrix and the substrate in the desired position.

A thermosetting resin is used in the above-mentioned British Patent Specification. The described method may also be adopted when a synthetic resin composition is used which is cured under the influence of light, as described, for example, in the published German Patent Application No. 2,637,257.

It is the object of the present invention to provide a method of manufacturing an optical element as described hereinbefore in which there is started from a substrate having a spherical surface, in which a good mutual positioning of substrate and matrix can be reached without a guiding mechanism and in which the thickness variation of the correction layer is such that the shrinkage due to curing does not give way to inaccuracies.

According to the invention this object is achieved by means of a method which is characterised in that the spherical surface of the substrate has a radius of curvature which is of such a magnitude that the synthetic resin layer has a minimum thickness adjacent to the collection of inflection points.

The invention is based on the gained recognition of the fact that the radius of curvature of the spherical surface of the substrate can be chosen freely within certain limits, the correction layer also serving for the correction of the focal distance. When the radius of curvature is chosen in accordance with the invention, the substrate and the matrix approach each other most closely near a collection of points which are situated on a circle having not too small a diameter, so that an accurate positioning is possibe. Such an accurate positioning is not achieved when the radius of curvature of the spherical surface of the substrate is so small that the substrate and the matrix approach each other most closely near a single point approximately in the centre of the matrix and the substrate. In that case also, the thickness of the correction layer at the outer edge becomes undesirably large as a result of which problems arise during curing due to shrinkage. If, on the contrary, the radius of curvature of the spherical surface of the substrate is so large that the substrate and the matrix approach each other most closely near the outer edge of the substrate, then an accurate positioning is possible, but the thickness of the correction layer is then inadmissibly large in the centre. This again gives rise to shrinkage problems.

If the points of nearest approach of the substrate and the matrix are situated in the centre or at the edge, then the differences in thickness in the correction layer are approximately twice as large as when said points are situated adjacent to the collection of inflection points.

In GB—A—550645 a method of manufacturing an optical element is disclosed, in which a correction layer is provided by plastic moulding, in which case shrinkage problems hardly occur. In GB—A—550645 an alternative method of manufacturing an optical element is also disclosed, in which a correction layer is provided by solvent casting. In that case the volume shrinks by a large factor and such a method can not be used to manufacture very accurate optical elements. In both cases, GB—A—550645 does not disclose a method by which an accurate centering may be achieved by the choice of the radius of curvature of the substrate.

The invention will be described in greater detail with reference to an example and comparative examples, and with reference to a drawing in which:

Figure 1 is a cross-sectional view of a substrate and a matrix according to the invention,

Figure 2 is a cross-sectional view of a substrate with a correction layer according to the invention,

Figure 3 is a cross-sectional view of a substrate and a matrix not according to the invention,

Figure 4 is a cross-sectional view of a substrate and a matrix not according to the invention, and

Figure 5 is a cross-sectional view of a substrate and a device according to the invention.

Example (according to the invention)

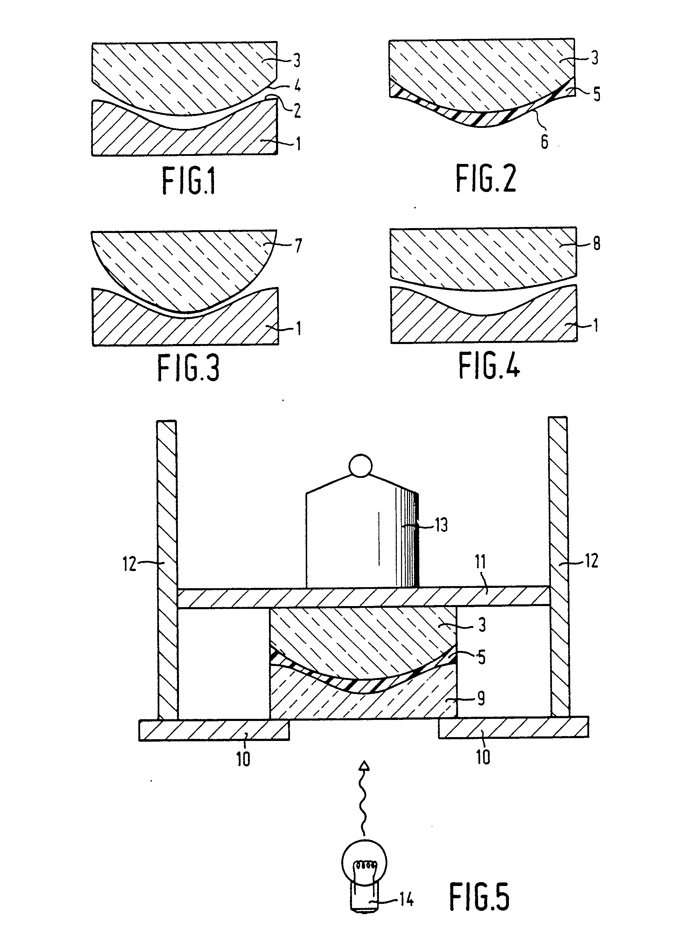

Figure 1 of the drawing is a cross-sectional view of a matrix 1, for example of glass or a metal, the surface 2 of which is complementary to the desired surface of the correction layer. The substrate 3 which may be manufactured, for example, from glass or a transparent synthetic resin, has an approximately spherical surface 4. A quantity of a curable liquid synthetic resin composition is provided between the surfaces 2 and 4, after which the distance between the matrix and the substrate is reduced to an extreme position, after which the curable synthetic resin composition is cured. The curable liquid synthetic resin composition may be provided between the matrix and the substrate after these have been placed opposite each other, but it is efficacious to provide the curable synthetic resin composition in the form of a drop on the substrate or on the matrix, after which the matrix and the substrate, respectively, are placed on the drop of liquid and are subjected to a small compressive force.

The choice of the curable synthetic resin composition is determined by the requirements which are imposed on the correction layer, for example, as regards hardness, light transmission and refractive index. Suitable starting materials are monomeric or oligomeric acrylates, for example, the diglycidyl ether of bisphenol A, with which α,α-dimethoxy-α-phenyl acetophenone may be used as an initiator. This synthetic resin may be made to cure under the influence of UV-light, for example, by exposure to the light of a medium-pressure mercury lamp having a wavelength of 360 nm for 1 minute.

Figure 2 is a cross-sectional view of the substrate 3 bearing a correction layer 5 the free surface 6 of which shows the desired aspherical shape. The diameter of the substrate 3 may be, for example, 5 mm. If in that case a weight of 30 g is used to compress the substrate 3 and the matrix 1 during curing of the synthetic resin layer 5, the smallest thickness of the correction layer 5 after curing will be approximately 1 μm (adjacent to the substantially circular collection of inflection points) as a result of capillary forces. In that case the largest thickness in the centre is 7—15 μm and at the outer edge is approximately 15 μm.

The desired radius of curvature of the spherical surface 4 of the substrate 2 according to the invention can simply be determined from a drawing or by means of a few experiments in which an accuracy of a few micrometres is necessary. A control of the place where the synthetic resin layer has the smallest thickness is possible, for example, by measuring interference rings.

Comparative Examples (not according to the invention)

Figure 3 is a cross-sectional view of a matrix 1 and a substrate 7, which substrate 7 has a surface having such a small radius of curvature that the matrix 1 and the substrate 7 approach each other most closely near the centre of the matrix 1 and the substrate 7. The thickness of the correction layer at the outer edge is approximately twice as large as in the example according to the invention. The mutual position of the matrix 1 and the substrate 7 is not determined accurately because a lateral displacement of the substrate 7 with respect to the matrix 1 is possible, unless the two are subjected to a very large compressing force.

Figure 4 is a cross-sectional view of a matrix 1 and a substrate 8, which substrate 8 has a surface having such a large radius of curvature that the matrix 1 and the substrate 8 approach other other most closely near the outer edge of the substrate 8. The thickness of the correction layer 5 in the centre is approximately twice as large as in the example according to the invention, as a result of which the synthetic resin layer 5, upon curing, shrinks considerably in the centre whereby surface irregularities may arise.

Example of a device according to the invention Figure 5 is a cross-sectional view (not drawn to scale) of a substrate and a device according to the invention. A light transmitting matrix 9 bears on an annular support 10. Both the substrate 3 and the matrix 9 have flat rear surfaces. A substrate 3 having a surface with a radius of curvature according to the invention is present above the matrix 9. A quantity of a curable liquid synthetic resin composition 5 is present between the matrix 9 and the substrate 3. The substrate 3 is pressed by a plate 11 which is parallel to the support 10 and which can be moved between guides 12 with respect to the support 10. The plate 11 is pressed against the substrate 3 with an accurately determined force, for example, by means of a weight 13. The curable liquid synthetic resin composition 5 may be cured by exposure to the light of an ultraviolet lamp 14, the light being guided through the matrix 9.

When using the method according to the invention it is also possible to use a matrix which is not light transmitting. In that case the light may be guided to the synthetic resin composition through the substrate. Moreover it is possible to use a synthetic resin composition which can be cured under the infuence of heat.

**Claim**

A method of manfacturing an optical element comprising a substrate (3) having an approximately spherical surface (4) and a correction layer of synthetic resin (5) which is provided on said surface and the free surface (6) of which is convex aspherical and shows a collection of inflection points situated approximately on a circle, according to which method the substrate is placed opposite to and spaced from a rotationally symmetrical matrix (1) which has a concave aspherical surface (2) having a collection of inflection points situated approximately on a circle, a curable liquid synthetic resin composition being provided between the matrix and the substrate, the distance between the matrix and the substrate being reduced to a desired final position, the synthetic resin composition being cured and the substrate together with the correction layer of cured synthetic resin connected thereto and the free surface (6) of which is a negative copy of the surface (2) of the matrix being removed from the matrix, characterized in that the radius of curvature of the spherical surface (4) of the substrate (3) is of such magnitude that the synthetic resin layer (5) has a minimum thickness adjacent to the collection of inflection points.

## Patentanspruch

Verfahren zur Herstellung eines optischen Elementes, das ein Substrat (3) mit einer etwa sphärischen Oberfläche (4) sowie eine auf dieser Oberfläche angebrachte Korrekturschicht (5) aus Kunststoff aufweist, deren freie Oberfläche (6) konvex asphärisch ist und eine etwa auf einem Kreis liegende Sammlung von Wendepunkten aufweist, wobei nach diesem Verfahren das Substrat in einen geringen Abstand gegenüber einer drehsymmetrischen Matrize (1) gebracht wird, die eine konkave asphärische Oberfläche (2) aufweist mit einer etwa auf einem Kreis liegenden Sammlung von Wendepunkten, wobei zwischen der Matrize und dem Substrat eine flüssige härtbare Kunststoffzusammensetzung vorgesehen, der Abstand zwischen der Matrize und dem Substrat zu einem erwünschten Endabstand verringert und die Kunststoffzusammensetzung zum Aushärten gebracht wird und das Substrat mit der damit verbundenen Korrekturschicht aus gehärtetem Kunststoff, dessen freie Oberfläche (6) eine negative Kopie der Oberfläche (2) der Matrize ist, von der Matrize entfernt wird, dadurch gekennzeichnet, dass der Krümmungsradius der sphärischen Oberfläche (4) des Substrats (3) so gross ist, dass die Kunststoffschicht (5) in der Nähe der Sammlung von Wendepunkten eine minimale Dicke hat.

## Revendication

Procédé pour la réalisation d'un élément optique muni d'un substrat (3) présentant une surface pratiquement sphérique (4) et d'une couche de correction en matière synthétique (5), qui est appliquée sur ladite surface et dont la surface libre (6) est convexe asphérique et comporte une collection de points d'inflexion situés pratiquement sur un cercle, procédé selon lequel le substrat est placé d'une façon espacée, vis-à-vis d'une matrice à symétrie de révolution (1), qui présente une surface asphérique concave (2) munie d'une collection de points d'inflexion situés pratiquement sur un cercle, une composition de matière synthétique liquide durcissante étant appliquée entre la matrice et le substrat, la distance comprise entre la matrice et le substrat étant réduite à une position finale désirée, la composition de matière synthétique étant durcie et le substrat, ensemble avec la couche de correction en matière synthétique durcie y reliée, dont la surface libre (6) est une copie négative de la surface (2) de la matrice, étant enlevée de la matrice, caractérisé en ce que le rayon de courbure de la surface sphérique (4) du substrat (3) est d'une grandeur telle que la couche en matière synthétique (5) présente une épaisseur minimale près de la collection de points d'inflexion.

FIG.1

FIG.2

FIG.3

FIG.4

FIG.5